# EUROPÄISCHE PATENTSCHRIFT

(11) **EP 0 816 143 B1**
(45) Veröffentlichungstag und Bekanntmachung des Hinweises auf die Patenterteilung: **22.01.2003**
(21) Anmeldenummer: 97110442.7
(22) Anmeldetag: 26.06.1997
(51) Int. Cl.: B60H 1/00

(54) **Einrichting zum Heizen und/oder Kühlen eines Fahrzeuges**
Device for heating and for cooling a vehicle
Dispositif de chauffage et/ou de réfrigération d'un véhicule

(30) Priorität: 28.06.1996 DE 19625927
(43) Veröffentlichungstag der Anmeldung: 07.01.1998
(73) Patentinhaber: WEBASTO KLIMATECHNIK GmbH, D-82131 Stockdorf (DE)
(72) Erfinder: Scheid, Helmut, 86920 Denklingen (DE)
(74) Vertreter: Wiese, Gerhard

(56) Entgegenhaltungen:
- EP-A- 0 524 656
- DE-A- 2 053 370
- DE-A- 3 834 387
- DE-A- 4 209 188
- DE-C- 19 536 974
- FR-A- 2 693 685

## Beschreibung

Die Erfindung betrifft eine Einrichtung zum Heizen und/oder Kühlen eines Fahrzeuges, insbesondere eines Omnibusses, gemäß den Merkmalen des Oberbegriffs des Patentanspruchs 1.

Eine derartige Einrichtung ist aus der DE 42 09 188 A1 bekannt. Bei der bekannten Einrichtung ist ein einziger Sekundärkreislauf zum Heizen und/oder Kühlen des Fahrzeug-Innenraumes vorgesehen. Für einen Omnibus mit zahlreichen Sitzreihen ist damit keine befriedigende Temperaturmischung oder -schichtung herstellbar.

Der vorliegenden Erfindung liegt die Aufgabe zugrunde, eine gattungsgemäße Einrichtung derart weiterzubilden, daß mittels dieser eine komfortable Einstellung unterschiedlicher Temperaturen in unterschiedlichen Bereichen des Fahrzeugs möglich ist.

Diese Aufgabe wird durch die Merkmale des Patentanspruchs 1 gelöst. Vorteilhafte Weiterbildungen der Erfindung sind den Unteransprüchen zu entnehmen.

Dadurch, daß mehrere Umschaltventile zur unabhängigen Ansteuerung mehrerer Sekundärkreisläufe vorgesehen sind, deren dritte Wärmetauscher verschiedenen Klimatisierungszonen des Fahrzeuges zugeordnet sind, ist eine komfortable Klimatisierung in verschiedenen Bereichen des Fahrzeuges möglich. Derartige Klimatisierungszonen können beispielsweise den vorderen, den mittleren und den hinteren Bereich des Busses, jeweils getrennt nach rechter und linker Seite, und zusätzlich getrennt nach Boden- bzw. Dachgruppen umfassen. In einer einfacheren Ausführungsform werden für die Einspeisung von Kaltwasser oder Warmwasser in die Sekundärkreisläufe sowie zur Steuerung der Rücklaufströme einfache 2-Wegeventile verwendet, wobei über die Zeitintervalldauer des Öffnens oder Schließens dieser Ventile eine Kühl- oder Heizleistung in den Sekundärkreisläufen steuerbar ist.

Der Begriff "einschiebbar" im Zusammenhang mit der Baueinheit soll dabei auch andere Formen des Einbringens, wie "einfahrbar", "einsetzbar" oder dergleichen umfassen.

Besonders vorteilhaft ist es, wenn bei der Einrichtung als Wärmeträger im Sekundärkreislauf Wasser mit einem Frostschutzmittel verwendet wird. Hierdurch können einzelne Wärmetauscher in separaten Klimazonen des Fahrzeuges über einfache Schlauchleitungen mit einem für die Umwelt unschädlichen Wärmeträger versorgt werden. Gegenüber der Leitung von klimatisierter Luft von einer zentralen Stelle aus über Luftkanäle bringt eine Verwendung von Wasser als Wärmeträger auch eine Reduzierung von Leitungsverlusten mit sich.

Vorteilhafterweise umfaßt die Baueinheit auch den oder die Verflüssiger. Hierdurch entfällt auch eine separate Montage der relativ großvolumigen Verflüssiger/Gebläse-Einheiten beim Fahrzeughersteller.

Die Baueinheit ist vorteilhafterweise als rahmenförmiges Gestell ausgebildet. Ein derartiger Rahmen ist leicht und dennoch stabil und an einzelnen der Streben angebrachte Aggregate sind zu Wartungszwecken leicht zugänglich.

Ein derartiges Gestell weist vorzugsweise eine schwenkbare Rückwand auf, an der der oder die Verflüssiger angeordnet ist bzw. sind. Alternativ dazu ist der Verflüssigerblock selbst schwenkbar am Gestell gelagert. Eine derartige schwenkbare Anordnung der Verflüssiger ermöglicht über deren direkte Anordnung an einer Seitenwand oder an der Rückwand des Fahrzeuges eine gute Wärmeabfuhr von den Verflüssigern und gleichzeitig über die Schwenkbarkeit eine gute Zugänglichkeit zu den Verflüssigern und zu den übrigen Aggregaten der Einrichtung.

Die Komponenten des Kältemittelkreislaufes der Einrichtung sind vorzugsweise durch feste Rohre miteinander verbunden. Derartige Rohre haben den Vorteil, daß sie eine hohe Dichtigkeit aufweisen und somit einen Verlust von Kältemittel verhindern.

Die Anschlußeinheiten sind vorzugsweise als eine Seite einer Schnellverschlußkupplung ausgebildet, die mit an zu den dritten Wärmetauschern führenden Leitungen ausgebildeten Gegenstücken kuppelbar sind. Durch eine derartige Ausbildung wird die Montage der Einheit durch die schnelle Anbindung von vorbereiteten, im Fahrzeug verlegten Leitungen wesentlich erleichtert.

Gemäß einer vorteilhaften Weiterbildung ist/sind das bzw. die Umschaltventil(e) als Mischventil(e) ausgebildet, mittels dem oder denen ein Teilstrom des Sekundärkreislaufes, der mit dem ersten Wärmetauscher in Verbindung steht, mit einem weiteren Teilstrom des Sekundärkreislaufes, der mit dem zweiten Wärmetauscher in Verbindung steht, mischbar ist. Durch eine derartige Ausbildung kann auch bei einer ungeregelten Erzeugung von Kälte oder Wärme in den entsprechenden Aggregaten des Kältemittel- bzw. des Heizkreislaufes durch eine geeignete Mischung mit den Mischventilen eine für die Klimatisierung einer bestimmten Zone des Fahrzeuges erforderliche Temperatur exakt bereitgestellt werden.

Die Umschaltventile und die Aggregate des Kältemittelkreislaufes und/oder des Heizkreislaufes sind dabei vorzugsweise von einem zentralen Steuergerät aus ansteuerbar. Ein derartiges Steuergerät weist vorzugsweise eine automatische Grundfunktion auf, die unter Auswertung einer Außentemperatur- und einer Innentemperatur-Erfassung in den verschiedenen Klimazonen eine mittlere Wärmeträgertemperatur für die einzelnen Klimazonen bereitstellt, wobei die Automatik für jede einzelne der Klimazonen durch manuelle Übersteuerung durch den Fahrer abänderbar ist.

Zur weiteren Montagerleichterung weist die Baueinheit vorzugsweise eine elektrische Steckereinheit zur Anbindung an das Steuergerät auf. Somit können auch die elektrischen Leitungen innerhalb der Baueinheit beim Zulieferer vorbereitet und an die Steckereinheit herangeführt werden, sodaß vom Fahrzeughersteller im Fahrzeug vorbereitete Leitungen bei der Montage der Einrichtung durch einfaches Anstecken anschließbar sind.

Gemäß einer weiteren vorteilhaften Ausgestaltung der Erfindung weist die Baueinheit auch den Verdichter auf, der mittels eines Kupplungselementes beim Einschieben mit einer Welle eines Antriebsmotors des Fahrzeuges kuppelbar ist. Eine derartige Kupplung kann beispielsweise durch ineinandergreifende Klauen oder aber auch durch ein flexibles Kupplungselement, wie beispielsweise einen Keil- oder Zahnriemen, realisiert werden.

Nachfolgend ist ein Ausführungsbeispiel der Erfindung anhand der Zeichnungen beschrieben. Es zeigt:
Fig. 1 eine schematische perspektivische Gesamtansicht eines Fahrzeuges (Omnibus),
Fig. 2 einen schematischen Längsschnitt durch den Bodenbereich des Fahrzeuges,
Fig. 3 einen schematischen Längsschnitt durch den Dachbereich des Fahrzeuges,
Fig. 4 einen Anschlußplan mit allen Einzelkomponenten des Kältemittelkreislaufes, des Heizkreislaufes und dreier Sekundärkreisläufe und
Fign. 5A-D eine Draufsicht, eine Seitenansicht, eine Ansicht der Vorderwand und eine Ansicht der Rückwand der Einbaueinheit.

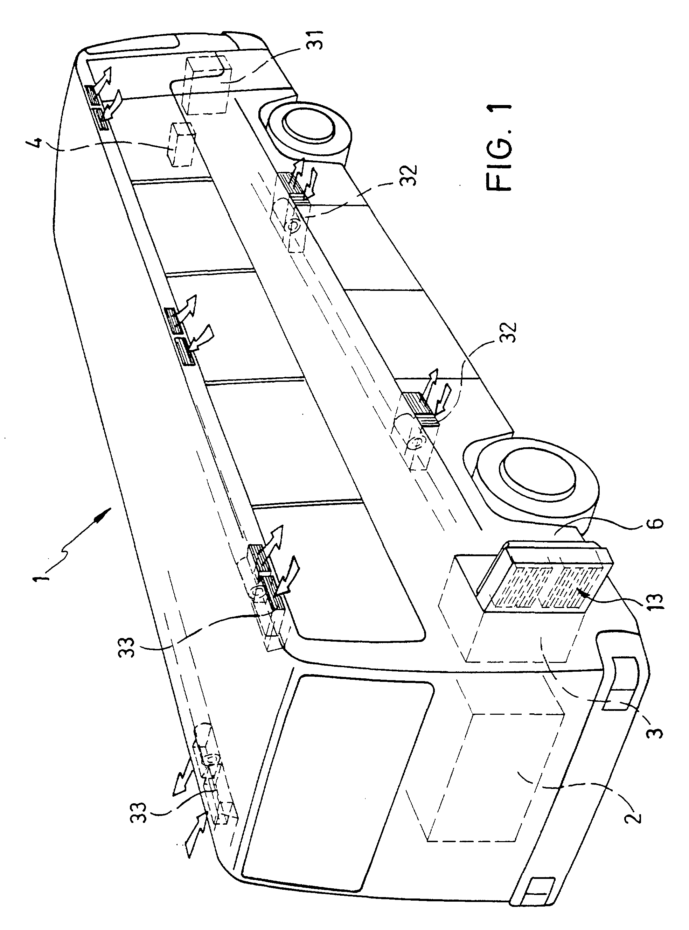

In Fig. 1 ist ein Omnibus 1 schematisch dargestellt, der von einem Antriebsmotor 2 im Heckbereich angetrieben wird und dessen Innenraum mittels einer insgesamt mit 3 bezeichneten Baueinheit zum Heizen und Kühlen klimatisiert wird. Die Baueinheit 3 ist in einen im Fahrzeug vorbereiteten Aufnahmeraum im Heckbereich in unmittelbarer Nachbarschaft des Antriebsmotors 2 einschiebbar und anschließend bezüglich ihrer Wärmeträgerleitungen sowie elektrischer Versorgungs- und Signalleitungen mit dem Fahrzeug kuppelbar.

Die Baueinheit 3 umfaßt einen insgesamt mit 10 bezeichneten Kältemittelkreislauf und ferner einen insgesamt mit 20 bezeichneten Heizkreislauf, in welchem mit einem Frost-schutzmittel versehenes Wasser als Wärmeträger über Wärmetauscher gekühlt bzw. erhitzt wird und anschließend über entsprechende Leitungen verschiedenen im Bodenbereich und im Dachbereich des Omnibusses 1 angeordneten Wärmetauschern zugeleitet wird.

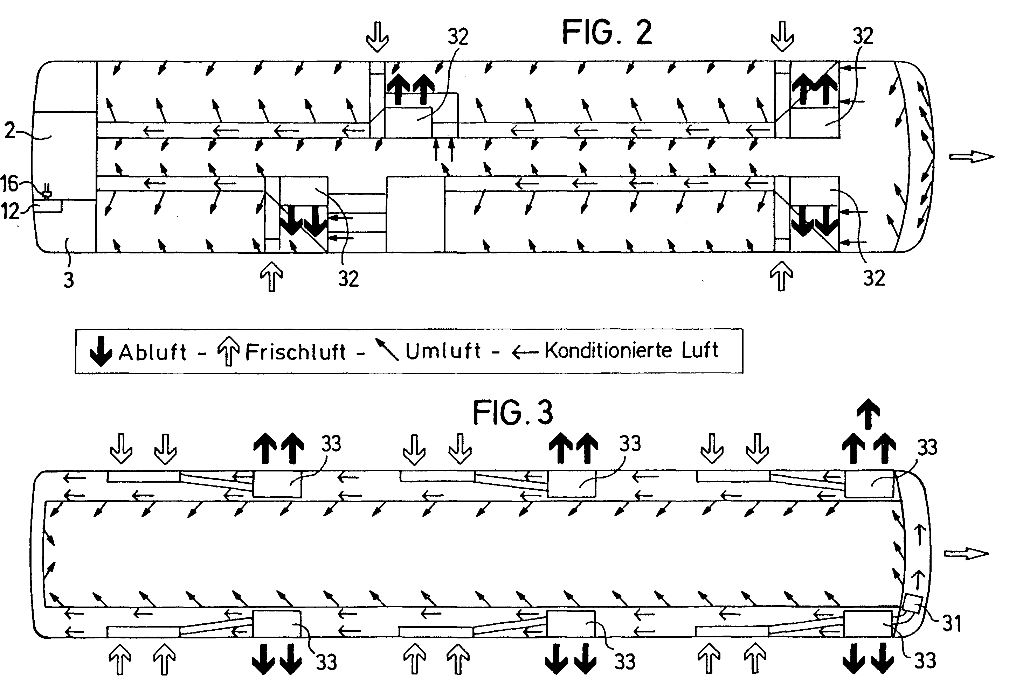

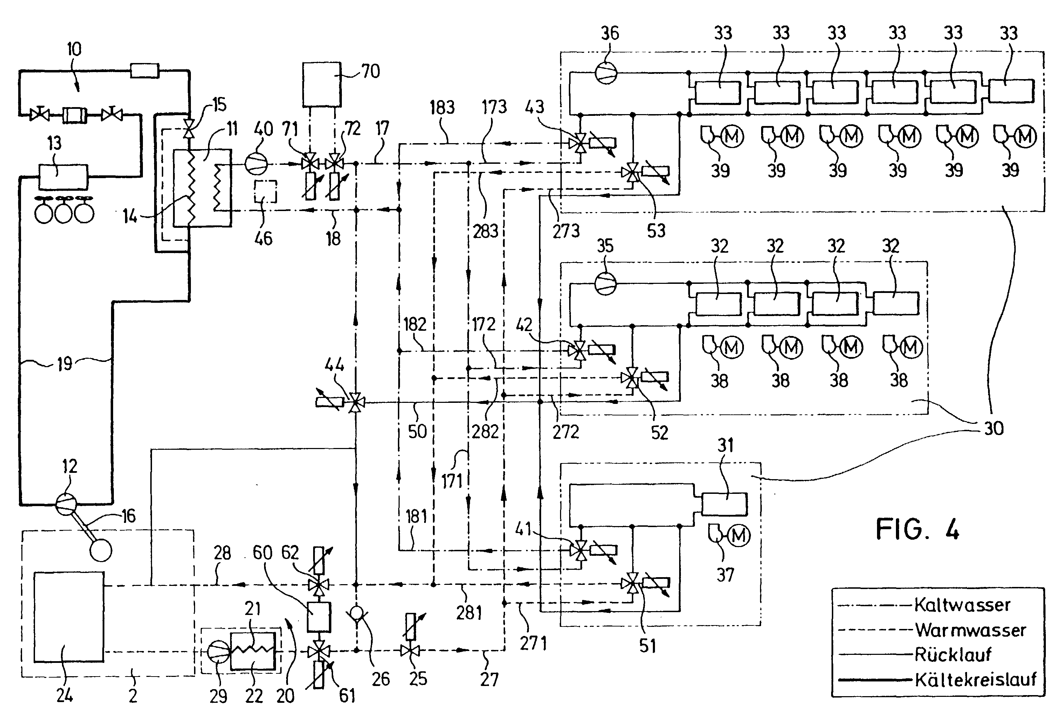

Diese zur Klimatisierung einzelner Zonen des Omnibusses 1 dienenden Wärmetauscher 32 des Bodenbereichs sind in Fig. 2 schematisch dargestellt. Ebenso sind die Wärmetauscher 33 des Dachbereichs in Fig. 3 schematisch dargestellt. Die Wärmetauscher 32 bzw. 33 sind dabei Bestandteile einer zonalen Klimatisierungseinheit, in welcher durch zugeführte Frischluft und/oder Umluft im indirekten Wärmeaustausch mit dem flüssigen Wärmeträger eine konditionierte Luft erzeugt wird, welche anschließend über Einströmer dem Fahrzeuginnenraum zugeführt wird. Der Anteil von Frischluft und Umluft ist dabei jeweils durch nicht dargestellte Klappen in den Klimatisierungseinheiten. zwischen 0 und 100% regelbar. Bei 100%iger Frischluftzufuhr wird gleichzeitig aus dem Fahrzeuginnenraum ein entsprechender Anteil an Abluft in die Umgebung abgeführt. Bei entsprechend verringerter Zufuhr von Frischluft geht ein entsprechend geringerer Anteil an Abluft in die Umgebung. Die Zufuhr von Frischluft und die Abfuhr von Abluft erfolgen unmittelbar an den jeweiligen zonalen Klimatisierungseinheiten über Öffnungen in der Außenwand des Omnibusses 1.

Wie in Fig. 4 dargestellt, umfaßt der Kältemittelkreislauf 10 einen ersten, als Plattenwärmetauscher ausgebildeten Wärmetauscher 11, in welchem der Verdampfer 14 des Kältemittelkreislaufes integriert ist und im indirekten Wärmeaustausch mit Frostschutzmittel versehenes Wasser als Wärmeträger abkühlt, welches über eine Umwälzpumpe 40 und eine Vorlaufleitung 17 den Sekundärkreisläufen 30 zur Verfügung gestellt wird. Der Kältemittelkreislauf 10 umfaßt ferner einen vom Antriebsmotor 2 über ein Kupplungselement 16 gekuppelten Verdichter 12, einen Verflüssiger 13, den bereits erwähnten Verdampfer 14 sowie ein Expansionsventil 15, welche untereinander durch vorzugsweise als feste Rohre ausgebildete Leitungen 19 verbunden sind. Das über die Vorlaufleitung 17 zu den einzelnen Wärmetauschern der Sekundärkreisläufe 30 geförderte kalte Wasser kehrt über eine Rücklaufleitung 18 zum ersten Wärmetauscher 11 zurück, wobei in die Rücklaufleitung vorzugsweise ein Ausgleichsbehälter 46 eingebunden ist. Parallel in einem Zweig der Vorlaufleitung 17 ist über Ventile 71 bzw. 72 ein Eisspeicher 70 eingebunden, in dem während des Betriebs des Omnibusses 1 überschüssige Kälte in Eis verwandelt und bei einer folgenden Betriebspause zum motorunabhängigen Vorkühlen verwendet werden kann.

Die Baueinheit 3 umfaßt ferner einen Heizkreislauf 20, für welchen der außerhalb der Baueinheit 73 angeordnete Antriebsmotor 2 des Omnibusses 1, ein in die Baueinheit integriertes Fahrzeugzusatzheizgerät 22 sowie ergänzend oder alternativ zu letzterem ein Latentwärmespeicher 60 als Wärmequellen fungieren. Das von einer oder mehreren dieser Wärmequellen 2, 22 oder 60 bereitgestellte aufgeheizte Wasser wird über eine Vorlaufleitung 27 den Sekundärkreisläufen 30 zur Verfügung gestellt und kehrt über eine Rücklaufleitung 28 zum Antriebsmotor 2 zurück. In der Vorlaufleitung 27 ist ein Umschaltventil 25 vorgesehen, mittels dem die Vorlaufleitung 27 absperrbar ist, wobei dann über eine die Vorlaufleitung 27 mit der Rücklaufleitung 28 verbindende Bypassleitung, in welcher ein Rückschlagventil 26 angeordnet ist, der vom Fahrzeugzusatzheizgerät 22 erhitzte Wärmeträger 21 ausschließlich oder anteilig zur Vorwärmung des Antriebsmotors 2 verwendet wird. Die Förderung des Wärmeträgers im Heizkreislauf 20 erfolgt durch eine Umwälzpumpe 29, welche vorzugsweise im Fahrzeugzusatzheizgerät 22 integriert oder an diesem angeflanscht ist.

Das Aufladen des Latentwärmespeichers 60 erfolgt vorzugsweise über in Abhängigkeit von der Temperatur des Antriebsmotors 2 gesteuerte Ventile 61 bzw. 62 in Betriebsphasen, in denen ein Wärmeüberschuß besteht. Die gespeicherte Wärme kann in Betriebspausen zum Vorheizen oder zum Zuheizen bei Wärmedefizit verwendet werden.

Die Vorlaufleitung 17 verzweigt sich, vom ersten Wärmetauscher 11 kommend, in drei Teilzweige 171, 172 und 173, welche zu je einem der drei Sekundärkreisläufe 30 führen. Der erste Sekundärkreislauf dient zur Klimatisierung des Frontbereiches des Fahrzeuges (Omnibus 1), wobei der flüssige Wärmeträger innerhalb einer Frontbox einen Wärmetauscher 31 durchströmt. Ein Gebläse 37 sorgt für eine Durchströmung des Wärmetauschers 31 mit Frischluft und/oder Umluft.

An die drei Sekundärkreisläufe 30 sind in gleicher Weise drei Teilzweige 271, 272 und 273 der Vorlaufleitung 27 des Heizkreislaufes angeschlossen.

Für den Rücklauf des Wärmeträgers zum ersten Wärmetauscher 11 sind in den drei Sekundärkreisläufen 30 drei Teilzweige 181, 182 und 183 der Rücklaufleitung 18 vorgesehen. Für den Rücklauf des Wärmeträgers aus den drei Sekundärkreisläufen 30 zum Heizkreislauf 20 sind drei Teilzweige 281, 282 und 283 vorgesehen, welche in die gemeinsame Rücklaufleitung 28 einmünden.

Der zweite Sekundärkreislauf 30, der in Fig. 4 rechts im mittleren Bereich dargestellt ist, dient zur Versorgung der in Fig. 2 dargestellten Wärmetauscher 32 der Bodengruppe des Omnibusses 1. Im Ausführungsbeispiel sind vier solcher Wärmetauscher 32 dargestellt, denen jeweils ein Gebläse 38 zur Förderung von Frischluft und/oder Umluft zugeordnet ist. Da es sich um eine Kette von mehreren parallel geschalteten Wärmetauschern 32 handelt, ist diesem Sekundärkreislauf eine separate Umwälzpumpe 35 zugeordnet. Diese ist eingangsseitig über ein Umschaltventil 42 an die Zulaufleitung 172 und an die Rücklaufleitung 182 für das kalte Wasser angeschlossen. Sie ist ferner über ein Umschaltventil 52 mit der Vorlaufleitung 272 und mit der Rücklaufleitung 282 verbunden. Je nach Kälte- oder Wärmebedarf werden über die Umschaltventile 42 bzw. 52 im Sekundärkreislauf 30 beliebige Mischungen des Wärmeträgers hergestellt, sodaß eine unabhängige Ansteuerung der für die Bodengruppe bereitgestellten Vorlauftemperatur erfolgen kann.

Ebenso ist beim dritten Sekundärkreislauf 30 den im Ausführungsbeispiel sechs verschiedenen Wärmetauschern 33 im Dachbereich eine Umwälzpumpe 36 zugeordnet, welche eingangsseitig über ein Umschaltventil 43 an die Vorlaufleitung 173 und an die Rücklaufleitung 183 des Kaltwassersatzes angeschlossen ist und die ferner über die Vorlaufleitung 273 und die Rücklaufleitung 183 an den Heizkreislauf 20 angebunden ist. Den Wärmetauschern 33 ist wiederum jeweils ein Gebläse 39 zur individuellen Förderung von Frischluft und/oder Umluft in den einzelnen Klimazonen zugeordnet.

In gleicher Weise ist der Wärmetauscher 31 des ersten Sekundärkreislaufes für die Frontbox über ein Umschaltventil 41 mit der Vorlaufleitung 171 und der Rücklaufleitung 181 für das kalte Wasser sowie über ein Umschaltventil 51 mit der Vorlaufleitung 271 und der Rücklaufleitung 281 des Heizkreislaufes verbunden. Da für diesen Sekundärkreislauf nur ein einziger Wärmetauscher 31 vorgesehen ist, kann die Umwälzung des Wärmeträgers über die Umwälzpumpen 29 bzw. 40 erfolgen, sodaß hier auf eine separate Umwälzpumpe verzichtet wurde.

Zusätzlich zu den Rücklaufleitungen 181, 182 und 183 bzw. 281, 282 und 283 ist jeder der Sekundärkreisläufe 30 zusätzlich mit einer gemeinsamen Rücklaufleitung 50 verbunden, welche über ein Umschaltventil 44 sowohl über die Rücklaufleitung 18 mit dem Kaltwasserkreislauf als auch über die Rücklaufleitung 28 mit dem Heizkreislauf verbunden werden kann. Je nachdem, ob geheizt oder gekühlt wird, erfolgt eine entsprechende Umschaltung des Umschaltventils zum ersten Wärmetauscher 11 oder zum Heizkreislauf In einer vereinfachten Ausführungsform kann auf das Umschaltventil 44 verzichtet werden, sodaß an dem betreffenden Verzweigungsknoten der Rücklaufleitung 50 - je nachdem ob die Umwälzpumpe 29 oder 40 in Betrieb ist - über die Drücke entschieden wird, wohin das zurücklaufende Wasser fließt.

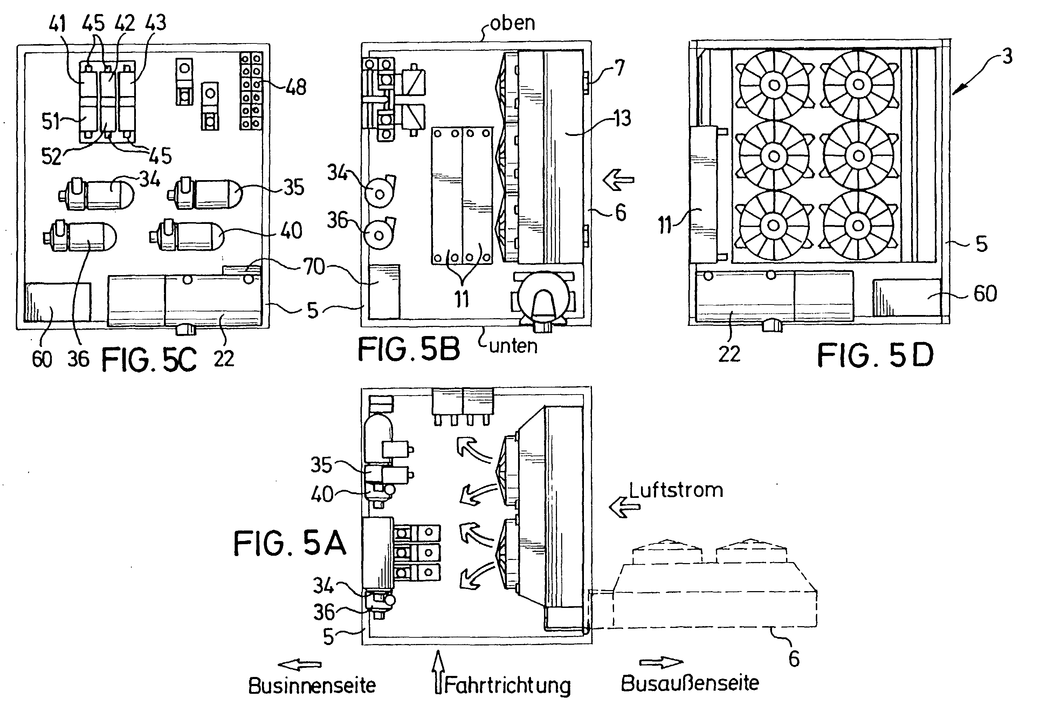

In den Fign. 5A-D ist die Baueinheit zum Heizen und Kühlen mit den darin vorgesehenen Aggregaten in mehreren Ansichten dargestellt. Die Baueinheit 3 wird außen skelettartig von einem Gestell 5 gebildet, an dessen Streben die einzelnen Aggregate des Kältemittelkreislaufes 10 und des Heizkreislaufes 20 angeordnet sind. Dabei sind an der zur Fahrzeugmitte weisenden Wand zum einen die Umwälzpumpen 34, 35, 36 und 40 und zum anderen die Umschaltventile 41, 42, 43, 51, 52 und 53 angeordnet. Diese Umschaltventile sind jeweils mit einer Anschlußeinheit 45 versehen, die einen Teil einer Schnellkupplung bildet, sodaß die Gegenstücke an den fahrzeugseitig verlegten Leitungen beim Einschieben der Baueinheit 3 einfach durch Zusammenstecken mit diesen gekuppelt werden können. Zum gleichen Zweck ist an der zur Fahrzeugmitte weisenden Wand des Gestells 5 eine elektrische Steckereinheit 48 vorgesehen, an die alle elektrischen Anschlüsse zur Energieversorgung und zur Signalübertragung der in der Baueinheit 3 zusammengefaßten Elemente herangeführt sind. Beim Einschieben der Baueinheit werden die fahrzeugseitig verlegten Leitungen über entsprechende Stecker in einfacher Weise mit dieser Steckereinheit 48 gekuppelt.

Der erste Wärmetauscher 11 ist in Form von zwei nebeneinander liegenden Plattenwärmetauschern an einer Seitenwand der Baueinheit 3 vorgesehen. Ein solcher Plattenwärmetauscher hat den Vorteil, daß hohe Energieleistungen mit einem relativ kleinen Bauvolumen übertragbar sind.

An der zur Fahrzeugaußenseite liegenden Rückwand 6 des Gestells 5 ist der Verflüssiger 13 mit den ihm zugeordneten Kühlgebläsen derart angeordnet, daß die Rückwand 6 nach Art einer schwenkbaren Tür mit Scharnieren 7 am übrigen Gestell 5 angelenkt ist, sodaß diese, wie in Fig. 5A angedeutet, zu Wartungszwecken einfach nach außen geöffnet werden kann. Hinter dieser schwenkbaren Rückwand 6 ist das Fahrzeugzusatzheizgerät 22 angeordnet, daß somit ebenfalls zu Wartungszwecken leicht zugänglich ist.

Alle an der Baueinheit 3 montierten Einzelkomponenten sind untereinander durch feste Leitungen verbunden. Die Schwenkbarkeit der Verflüssiger 13 wird durch flexible Rohre oder kurze Schlauchteile hergestellt. Die Vormontage erfolgt vorzugsweise bei einem darauf spezialisierten Fahrzeugzulieferer als Systemlieferant. Hierdurch ist gewährleistet, daß der gegen Leckagen besonders empfindliche Kältemittelkreislauf hermetisch abgedichtet und vorgefüllt ist. Im Falle einer Störung kann eine komplette Baueinheit beispielsweise bei einem größeren Busunternehmen aufgrund der einfachen Stecker- und Schnellschlußverbindungen innerhalb kurzer Zeit vollständig gegen eine Ersatz-Baueinheit ausgetauscht werden, sodaß durch Ausfall einzelner Komponenten keine nennenswerten Stillstandszeiten für das Fahrzeug entstehen.

Die vorstehend beschriebene Einrichtung ist in ihrem Aufbau einfach und kompakt und aufgrund der hohen Integration von Bauteilen und Verbindungsleitungen leicht im Fahrzeug montierbar und demontierbar. Falls auch der Verdichter 12 zur Baueinheit 3 gehört, ist dieser beim Einschieben der Einheit 3 in den Aufnahmeraum am Fahrzeug mittels einer Kupplung 16 mit dem Antriebsmotor 2 verbindbar, die von einer Klauenkupplung oder von einem Riementrieb gebildet wird.

### Bezugszeichenliste

- 1: Omnibus
- 2: Antriebsmotor
- 3: Baueinheit (zum Heizen und Kühlen)
- 4: Steuergerät
- 5: Gestell (von 3)
- 6: Rückwand (von 5)
- 7: Scharnier
- 10: Kältemittelkreislauf
- 11: (erster) Wärmetauscher
- 12: Verdichter
- 13: Verflüssiger
- 14: Verdampfer
- 15: Expansionsventil
- 16: Kupplungselement
- 17: Vorlaufleitung (Kaltwasser)
- 19: Leitung (für Kältemittel)
- 20: Heizkreislauf
- 21: (zweiter) Wärmetauscher
- 22: Fahrzeugzusatzheizgerät
- 23: Motorblock
- 24: Fahrzeugkühler
- 25: Umschaltventil (Motorheizung)
- 26: Rückschlagventil
- 27: Vorlaufleitung (Warmwasser)
- 28: Rücklaufleitung (Warmwasser)
- 29: Umwälzpumpe (am Fahrzeugzusatzheizgerät)
- 30: Sekundärkreisläufe
- 31: (dritter) Wärmetauscher (Frontbox)
- 32: (dritter) Wärmetauscher (Bodenbereich)
- 33: (dritter) Wärmetauscher (Dachbereich)
- 34: Umwälzpumpe (Frontbox)
- 35: Umwälzpumpe (Bodenbereich)
- 36: Umwälzpumpe (Dachbereich)
- 37: Gebläse (Frontbox)
- 38: Gebläse (Bodenbereich)
- 39: Gebläse (Dachbereich)
- 40: Umwälzpumpe (Kaltwasser-Frontbox)
- 41: Umschaltventil (Kaltwasser-Frontbox)
- 42: Umschaltventil (Kaltwasser-Bodenbereich)
- 43: Umschaltventil (Kaltwasser-Dachbereich)
- 44: Umschaltventil (Rücklaufleitung)
- 45: Anschlußeinheit
- 46: Ausgleichsbehälter
- 48: (Elektr) Steckereinheit
- 50: (gemeinsame) Rücklaufleitung
- 51: Umschaltventil (Warmwasser-Frontbox)
- 52: Umschaltventil (Warmwasser-Bodenbereich)
- 53: Umschaltventil (Warmwasser-Dachbereich)
- 60: Latentwärmespeicher
- 61: Ventil
- 62: Ventil
- 70: Eisspeicher
- 71: Ventil
- 72: Ventil

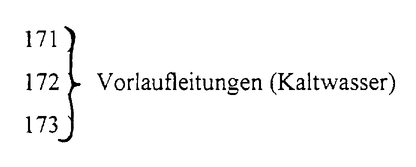

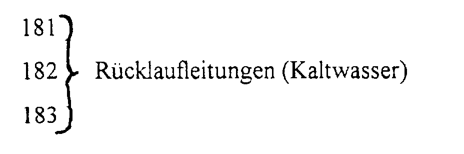

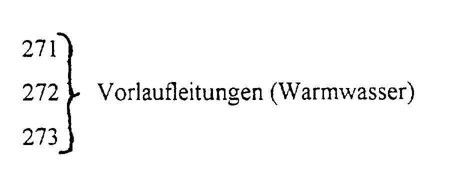

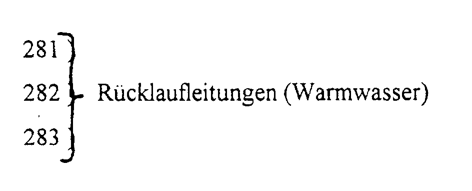

## Patentansprüche

1. Einrichtung zum Heizen und/oder Kühlen eines Fahrzeuges, insbesondere eines Omnibusses (1),
- mit einem einen Verdichter (12), einen ersten Wärmetauscher (11) ein Expansionsventil (15) und einen Verflüssiger (13) umfassenden Kältemittelkreislauf (10),
- mit einem wenigstens eine Wärmequelle (22; 23) und wenigstens einen zweiten Wärmetauscher (22) umfassenden Heizkreislauf (20),
- mit wenigstens einem über ein Umschaltventil (41, 42, 43; 51, *52,* 53) wahlweise mit dem ersten (11) oder dem zweiten Wärmetauscher (22) in Strömungsverbindung bringbaren Sekundärkreislauf (30), in dem wenigstens ein dritter Wärmetauscher (31, 32, 33) zur Klimatisierung eines Fahrzeuginnenraumes angeordnet ist,
- wobei die Wärmequelle als motorunabhängig betreibbares Fahrzeugzusatzheizgerät (22) und/oder als Latentwärmespeicher (60) ausgebildet ist, in dem der zweite Wärmetauscher integriert ist und welches gemeinsam mit dem ersten Wärmetauscher (11) und den Umschaltventilen (41, 42, 43; 51, 52, 53) sowie mit Anschlußeinheiten (45) zur Anbindung der dritten Wärmetauscher (31, 32, 33) zu einer Baueinheit (3) zusammengefaßt ist, die in einen Aufriahmeraum des Fahrzeuges (1) einschiebbar ist,
- **dadurch gekennzeichnet, daß**
- mehrere Umschaltventile (41, 42, 43; 51, 52, 53) zur unabhängigen Ansteuerung mehrerer Sekundärkreisläufe (30) vorgesehen sind, deren dritte Wärmetauscher (31, 32, 33) verschiedenen Klimatisierungszonen des Fahrzeuges zugeordnet sind.

2. Einrichtung nach Anspruch 1, **dadurch gekennzeichnet, daß** als Wärmeträger im Sekundärkreislauf (30) Wasser mit einem Frostschutzmittel verwendet wird.

3. Einrichtung nach einem der vorhergehenden Ansprüche, **dadurch gekennzeichnet, daß** die Baueinheit (3) auch den oder die Veflüssiger (13) umfaßt.

4. Einrichtung nach einem der vorhergehenden Ansprüche, **dadurch gekennzeichnet, daß** die Baueinheit (3) als rahmenförmiges Gestell (5) ausgebildet ist.

5. Einrichtung nach Anspruch 3 und 4, **dadurch gekennzeichnet, daß** das Gestell (5) eine schwenkbare Rückwand (6) aufweist, an der/die Verflüssiger (13) angeordnet ist/sind.

6. Einrichtung nach einem der vorhergehenden Ansprüche. **dadurch gekennzeichnet, daß** die Komponenten (12, 13, 14, 15) des Kältemittelkreislaufes (10) durch feste Rohre (19) miteinander verbunden sind.

7. Einrichtung nach einem der vorhergehenden Ansprüche, **dadurch gekennzeichnet, daß** die Anschlußeinheiten (45) als eine Seite einer Schnellverschlußkupplung ausgebildet sind, die mit an zu den dritten Wärmetauschern (31, 32, 33) führenden Leitungen ausgebildeten Gegenstücken kuppelbar sind.

8. Einrichtung nach einem der vorhergehenden Ansprüche, **dadurch gekennzeichnet, daß** das (bzw. die) Umschaltventile (41, 42, 43; 51, 52, 53) als Mischventil(e) ausgebildet ist/sind, mittels dem/denen ein Teilstrom des Sekundärkreislaufes (30), der mit dem ersten Wärmetauscher (11) in Verbindung steht, mit einem weiteren Teilstrom des Sekundärkreislaufes, der mit dem zweiten Wärmetauscher (22) in Verbindung steht, mischbar ist.

9. Einrichtung nach einem der vorhergehenden Ansprüche, **dadurch gekennzeichnet, daß** die Umschaltventile (41, 42, 43; 51, 52, 53) und die Aggregate des Kältemittelkreislaufes (10) und/oder des Heizkreislaufes (20) von einem zentralen Steuergerät (4) aus ansteuerbar sind.

10. Einrichtung nach Anspruch 9, **dadurch gekennzeichnet, daß** die Baueinheit (3) eine elektrische Steckereinheit (48) zur Anbindung an das Steuergerät (4) aufweist.

11. Einrichtung nach einem der vorhergehenden Ansprüche, **dadurch gekennzeichnet, daß** die Baueinheit (3) auch den Verdichter (12) umfaßt, der mittels eines Kupplungselementes (16) mit einer Welle eines Antriebsmotors (2) des Fahrzeuges (1) kuppelbar ist.

12. Einrichtung nach einem der vorhergehenden Ansprüche, **dadurch gekennzeichnet, daß** in den Kältemittelkreislauf (10) ein Eisspeicher (70) eingebunden ist.

## Claims

1. A device for heating and/or cooling of a vehicle, particularly an omnibus (1),
- with a refrigerant circuit (10) comprising a compressor (12), a first heat exchanger (11), an expansion valve (15) and a liquidiser (13),
- with a heating circuit (20) comprising at least a heat source (22, 23) and at least one second heat exchanger (22),
- with at least one secondary circuit (30) which can be optionally brought via a switch-over valve (41, 42, 43; 51, 52, 53) into flowing communication with the first (11) or the second heat exchanger (22), and in which there is at least a third heat exchanger (31, 32, 33) for the air conditioning of a vehicle interior,
- whereby the heat source is constructed as a vehicle accessory heating unit (22) operable independently of the engine and/or as a latent heat storage means (60) in which the secondary heat exchanger is integrated and which, jointly with the first heat exchanger (11) and the switch-over valves (41, 42, 43; 51, 52, 53) and with connection units (45), for connecting the third heat exchanger (31, 32, 33), is integrated to form one structural unit (3) which can be pushed into a receiving space in the vehicle (1),
- **characterised in that**
- a plurality of switch-over valves (41, 42, 43; 51, 52, 53) are provided for the independent operation of a plurality of secondary circuits (30) of which the third heat exchangers (31, 32, 33) are associated with different air conditioning zones of the vehicle.

2. A device according to claim 1, **characterised in that** water with an anti-freeze agent is used as the heat carrier in the secondary circuit (30).

3. A device according to one of the preceding claims, **characterised in that** the structural unit (3) also comprises the liquidiser(s) (13).

4. A device according to one of the preceding claims, **characterised in that** the structural unit (3) is constructed as a frame-like chassis (5).

5. A device according to claim 3 and 4, **characterised in that** the chassis (5) comprises a pivotable rear wall (6) on which the liquidiser(s) (13) is/are disposed.

6. A device according to one of the preceding claims, **characterised in that** the components (12, 13, 14, 15) of the refrigerant circuit (10) are connected to one another by rigid tubes (19).

7. A device according to one of the preceding claims, **characterised in that** the connecting units (45) are constructed as one side of the rapid lock coupling which are adapted to be coupled to mating units constructed on connecting lines leading to the third heat exchangers (31, 32, 33).

8. A device according to one of the preceding claims, **characterised in that** the switch-over valve(s) (41, 42, 43; 51, 52, 53) is/are constructed as mixing valve(s), by means of which a partial flow from the secondary circuit (30) which communicates with the first heat exchanger (11) can be blended with a further partial flow from the secondary circuit which communicates with the second heat exchanger (22).

9. A device according to one of the preceding claims, **characterised in that** the switch-over valves (41, 42, 43; 51, 52, 53) and the assemblies comprising the refrigerant circuit (12) and/or the heating circuit (20) can be operated from a central control means (4).

10. A device according to claim 9, **characterised in that** the structural unit (3) comprises an electrical plug-in unit (48) for connection to the control means (4).

11. A device according to one of the preceding claims, **characterised in that** the structural unit (3) also comprises the compressor (12) which can be coupled to a shaft of a drive engine (2) of the vehicle (1) by means of a coupling element (16).

12. A device according to one of the preceding claims, **characterised in that** an ice storage means (17) is connected into the coolant circuit (10).

## Revendications

1. Dispositif de chauffage et/ou de rafraîchissement d'un véhicule, notamment d'un autobus (1),
- avec un circuit de réfrigérant (10) comprenant un compresseur (12), un premier échangeur de chaleur (11), un détendeur (15) et un condenseur (13),
- avec un circuit de chauffage (20) comprenant au moins une source de chaleur (22 ; 23) et au moins un deuxième échangeur de chaleur (22),
- avec au moins un circuit secondaire (30), qui peut être, au moyen d'une vanne de commutation (41, 42, 43 ; 51, 52, 53), amené en liaison fluidique au choix avec le premier (11) ou le deuxième (22) échangeur de chaleur, et dans lequel est disposé au moins un troisième échangeur de chaleur (31, 32, 33) pour climatiser l'habitacle du véhicule,
- la source de chaleur étant réalisée sous forme d'appareil auxiliaire (22) de chauffage du véhicule pouvant être exploité indépendamment du moteur et/ou sous forme d'accumulateur de chaleur latente (60), dans lequel est intégré le deuxième échangeur de chaleur et qui est regroupé, conjointement avec le premier échangeur de chaleur (11) et les vannes de commutation (41, 42, 43 ; 51, 52, 53) ainsi qu'avec des unités de raccordement (45) pour le rattachement du troisième échangeur de chaleur (31, 32, 33), en une unité de construction (3) qui peut être insérée dans un espace récepteur du véhicule (1),
**caractérisé en ce qu'**il est prévu plusieurs vannes de commutation (41, 42, 43 ; 51, 52, 53) pour l'asservissement indépendant de plusieurs circuits secondaires (30), dont les troisièmes échangeurs de chaleur (31, 32, 33) sont affectés à différentes zones de climatisation du véhicule.

2. Dispositif selon la revendication 1, **caractérisé en ce qu'**on utilise comme caloporteur dans le circuit secondaire (30) de l'eau additionnée d'un antigel.

3. Dispositif selon l'une des revendications précédentes, **caractérisé en ce que** l'unité de construction (3) comprend également le ou les condenseurs (13).

4. Dispositif selon l'une des revendications précédentes, **caractérisé en ce que** l'unité de construction (3) est conçue comme bâti (5) en forme de cadre.

5. Dispositif selon les revendications 3 et 4, **caractérisé en ce que** le bâti (5) présente une paroi arrière pivotante (6), sur laquelle est ou sont disposé(s) le ou les condenseur(s) (13).

6. Dispositif selon l'une des revendications précédentes, **caractérisé en ce que** les éléments (12, 13, 14, 15) du circuit de réfrigérant (10) sont mutuellement reliés par des conduites rigides (19).

7. Dispositif selon l'une des revendications précédentes, **caractérisé en ce que** les unités de raccordement (45) sont réalisées sous la forme d'éléments d'un raccord à fermeture rapide qui peuvent être accouplés à des éléments complémentaires réalisés sous forme de conduites menant aux troisièmes échangeurs de chaleur (31, 32, 33).

8. Dispositif selon l'une des revendications précédentes, **caractérisé en ce que** la ou les vanne(s) de commutation (41, 42, 43 ; 51, 52, 53) est ou sont réalisée(s) sous forme de vannes mélangeuses permettant de mélanger un flux partiel du circuit secondaire (30) qui est relié au premier échangeur de chaleur (11) à un autre flux partiel du circuit secondaire qui est relié au deuxième échangeur de chaleur (22)

9. Dispositif selon l'une des revendications précédentes, **caractérisé en ce que** les vannes de commutation (41, 42, 43 ; 51, 52, 53) et les éléments du circuit de réfrigérant (10) et/ou du circuit de chauffage (20) peuvent être asservis à partir d'un appareil de commande central (4).

10. Dispositif selon la revendication 9, **caractérisé en ce que** l'unité de construction (3) présente un ensemble de connecteur électrique enfichable (48) pour le rattachement à l'appareil de commande (4).

11. Dispositif selon l'une des revendications précédentes, **caractérisé en ce que** l'unité de construction (3) comprend également le compresseur (12), qui peut être accouplé au moyen d'un élément d'accouplement (16) à un arbre d'un moteur d'entraînement (2) du véhicule (1).

12. Dispositif selon l'une des revendications précédentes, **caractérisé en ce qu'**un accumulateur de glace (70) est incorporé dans le circuit de réfrigérant (10).
